# FASCICULE DE BREVET EUROPEEN

(11) **EP 2 686 539 B1**
(45) Date de publication et mention de la délivrance du brevet: **24.12.2014**
(21) Numéro de dépôt: 12714780.9
(22) Date de dépôt: 14.03.2012
(51) Int. Cl.: F02K 1/09, F02K 3/02, F02K 3/072, B64C 11/48, F02K 3/075

(54) **TURBOMACHINE A HELICE(S) POUR AERONEF, A TUYERE MOBILE**
TURBOMASCHINE MIT GEBLÄSE(N) FÜR FLUGZEUGE MIT MOBILER SCHUBDÜSE
TURBOMACHINE WITH FAN(S) FOR AIRCRAFT, WITH MOBILE JET NOZZLE

(30) Priorité: 14.03.2011 FR 1152064
(43) Date de publication de la demande: 22.01.2014
(73) Titulaire: Snecma, 75015 Paris (FR)
(72) Inventeur: DRON, Sébastien, F-94230 Cachan (FR); TANTOT, Nicolas, Jérôme, Jean, F-75012 Paris (FR)
(74) Mandataire: Gevers France
(86) Numéro de dépôt international: PCT/FR2012/050537
(87) Numéro de publication internationale: WO 2012/123681

(56) Documents cités:
- FR-A1- 2 944 774
- US-A- 2 537 772
- US-A- 4 446 696

## Description

La présente invention concerne les turbomachines à hélice(s) pour aéronefs.

Plus particulièrement, quoique non exclusivement, les turbomachines, objet de l'invention, peuvent être de tout type dès l'instant où elles comprennent au moins une hélice, par exemple du type à soufflante non carénée avec deux hélices contrarotatives, désignée généralement en anglais par l'expression « open rotor » ou « unducted fan », du type turbopropulseur à une ou plusieurs hélices propulsives, etc, (telles que décrites dans le document FR 2 944 774).

De façon usuelle; les turbomachines a hélices pour aéronef réalisent leur poussée globale par la combinaison de la traction engendrée par les hélices et de la poussée délivrée par la tuyère du générateur de gaz ou turbine, exploitant la détente des gaz de combustion. La majeure partie de la poussée globale est fournie par les hélices (au moins 80% de la poussée globale), le reste (moins de 20%) par la détente des gaz de combustion traversant la tuyère.

La répartition de la poussée globale entre les hélices et les gaz de combustion dans ces turbomachines, conditionnée notamment par la section de la tuyère du générateur de gaz, est bien entendu déterminé préalablement pour trouver le compromis le mieux adapté entre les différentes phases fonctionnelles rencontrées par l'aéronef (décollage, montée/descente, croisière, roulage au sol) et obtenir un rendement acceptable et une consommation acceptable des turbomachines, et réduire l'impact acoustique engendré par ces dernières via notamment leurs hélices.

Cependant, du fait qu'il s'agit d'un compromis, il est évident que les points ci-dessus ne sont pas optimisés pour chacune des phases fonctionnelles de l'aéronef. En effet, il serait par exemple souhaitable, en phase de décollage et de montée initiale, que l'on puisse réduire l'impact acoustique sur les hélices en réduisant leur part de poussée et augmenter, corrélativement, celle issue par la détente des gaz de combustion dans la tuyère. A contrario, en phase de croisière, il serait intéressant d'augmenter la part de poussée des hélices (sans augmenter leur vitesse de rotation), afin de tirer le plein bénéfice de leur rendement propulsif élevé, et de réduire celle issue de la détente des gaz, au rendement propulsif inférieur.

La présente invention a pour but de remédier à ces inconvénients et concerne une turbomachine à hélice(s) donc la conception permet d'adapter le fonctionnement de l'hélice ou des hélices et de la tuyère selon les différentes phases de vol de l'aéronef.

A cet effet, la turbomachine à hélice(s) pour aéronef, du type comportant au moins une turbine apte à entraîner en rotation l'hélice, et une tuyère prolongeant coaxialement ladite turbine en ménageant, avec un cône de sortie terminant la turbine, un passage à section transversale annulaire pour les gaz de combustion qui traversent la turbine, la tuyère étant montée mobile entre deux positions extrêmes pour lesquelles la section transversale annulaire du passage est respectivement minimale ou maximale, et des moyens de commande étant associés à la tuyère pour changer la position de celle-ci et faire varier la section transversale du passage des gaz de combustion selon les phases fonctionnelles de l'aéronef, est remarquable par le fait que, pour obtenir la variation de section transversale du passage des gaz de combustion, ladite tuyère se déplace, sous l'action des moyens de commande, en translation parallèlement à l'axe longitudinal de la turbomachine vers lequel converge le cône de sortie de la turbine.

Ainsi, grâce à l'invention, par la variation de la section de sortie de la tuyère rendue mobile, on peut modifier la répartition de poussée entre l'hélice (ou les hélices) et la tuyère en fonction des phases de l'aéronef, ce que ne permettant pas les turbomachines à hélices actuelles dont la section de tuyère est fixe.

Par exemple, pour la phase de décollage, on pourra privilégier une augmentation de la part de poussée engendrée par la tuyère afin de décharger les hélices et la turbine, et améliorer ainsi le rendement et réduire l'impact acoustique au sol par les pales des hélices alors moins contraintes aérodynamiquement. Pour cela, la tuyère occupe une position extrême pour laquelle la section transversale annulaire du passage des gaz est minimal. En effet, lorsque la section de la tuyère est faible, la détente possible (pression des gaz) dans la turbine de puissance qui entraîne les hélices, est réduite, de sorte que la poussée due aux hélices diminue avec moins de nuisances sonores engendrées, tandis que la détente traversant la tuyère augmente.

Pour les phases de montée et de croisière, on pourra privilégier, en revanche, par une position extrême de la tuyère pour laquelle la section transversale annulaire du passage des gaz est maximale, une augmentation de la part de poussée des hélices (d'autant plus que leur rendement propulsif est excellent en phase de croisière) et un minimum de poussée par la tuyère (au rendement sensiblement plus faible), de manière à optimiser le rendement thermopropulsif de la turbomachine.

Bien évidemment, toute position intermédiaire entre les deux positions extrêmes pourrait être envisagée.

De préférence, les moyens de commande sont définis par des vérins ou analogues reliant une partie de nacelle périphérique entourant la turbine, à la tuyère. Dans ce cas, les vérins de commande sont avantageusement disposés de façon régulièrement répartie angulairement autour de la tuyère et parallèlement à l'axe longitudinal de la turbomachine, pour déplacer en translation la tuyère entre ses positions extrêmes par rapport à la nacelle et au cône de sortie de la turbine convergeant vers ledit axe.

On comprend donc que la variation de section transversale est obtenue par suite du déplacement en translation de la tuyère, grâce à la convergence du cône axialement fixe, augmentant ou réduisant la section transversale annulaire du passage en fonction du coulissement de la tuyère.

Dans un mode de réalisation, lors du déplacement en translation de la tuyère entre ses positions extrêmes, la paroi cylindrique de celle-ci reste au contact de celle de la nacelle. Ainsi, même en position extrême reculée, la tuyère est dans le prolongement de la nacelle avec le passage des gaz de combustion ayant une section transversale annulaire maximale.

Dans un autre mode de réalisation, lors du déplacement en translation de la tuyère entre sa position extrême à section de passage minimale à sa position extrême à section de passage maximale, une ouverture annulaire se crée entre la nacelle et la tuyère. La tuyère est alors distante de la nacelle de sorte que l'ouverture latérale créée participe à l'augmentation de la section transversale annulaire maximale, en s'ajoutant à celle-ci.

Par ailleurs, dans une variante de réalisation, les moyens de commande de la tuyère sont réalisés en un matériau à mémoire de forme à deux états stables en fonction de la température, correspondant sensiblement aux positions extrêmes de la tuyère pour lesquelles la section de passage est minimale ou maximale. Ainsi, comme on le verra plus tard, la variation de la section transversale du passage s'effectue spontanément par une élévation et un abaissement de la température.
Les figures du dessin annexé feront bien comprendre comment l'invention peut être réalisée. Sur ces figures, des références identiques désignent des éléments semblables.
La figure 1 représente, en perspective schématique, l'arrière d'une turbomachine à hélices du type « open rotor ».
La figure 2 est une vue en perspective partielle écorchée et agrandie de la turbomachine illustrée en figure 1, avec la tuyère de sortie commandable.
Les figures 3 et 4 représentent, en coupe longitudinale partielle, selon un exemple de réalisation, les positions respectives minimale et maximale de la tuyère permettant la variation de la section de passage des gaz de combustion.
Les figures 5 et 6 représentent, en coupe longitudinale partielle, une variante à la réalisation des figures 3 et 4.

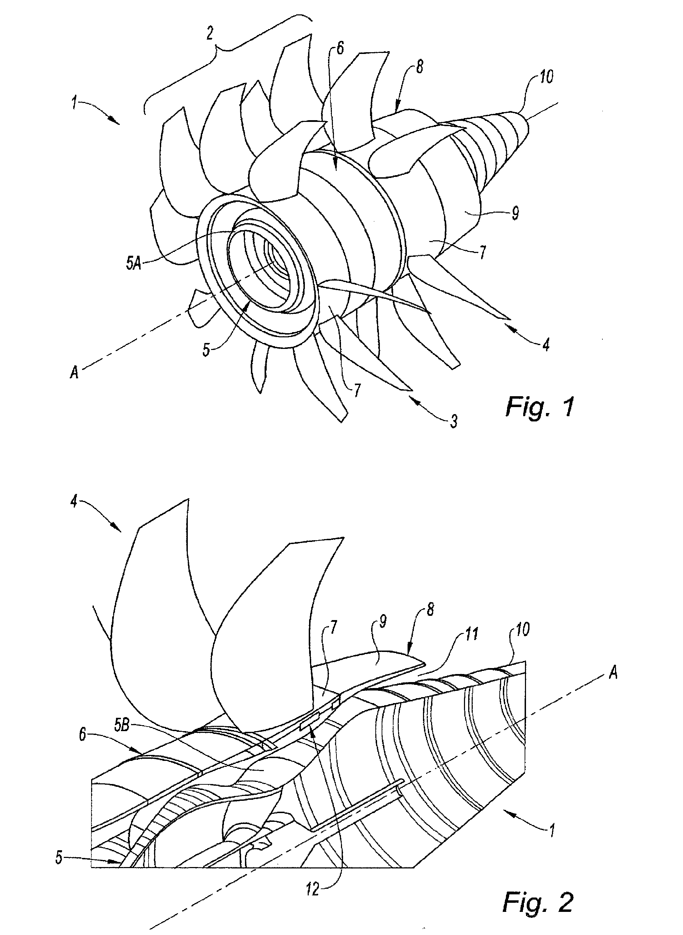

La turbomachine 1 montrée partiellement sur la figure 1 est une turbomachine à soufflante non carénée 2 désignée sous l'expression anglaise de « open rotor » ou « unducted fan » et qui comporte deux hélices arrière, coaxiales et contrarotatives, respectivement amont 3 et aval 4 par rapport à l'axe longitudinal A de la turbomachine.

Devant la soufflante 2, la turbomachine 1 comprend de façon usuelle, et selon le sens d'écoulement des gaz, un ensemble générateur de gaz composé de compresseurs, d'une chambre de combustion et de turbines physiquement reliées aux compresseurs, une turbine de puissance 5 telle que deux turbines basse pression successives, reliées respectivement en rotation et de façon contrarotative, aux hélices amont 3 et aval 4.

On voit schématiquement et partiellement sur la figure 1 la turbine basse pression 5A solidaire en rotation de l'hélice 3 et, sur la figure 2, l'autre turbine basse pression 5B solidaire en rotation de l'hélice 4. Ces hélices contrarotatives s'étendent radialement à l'extérieur de parties cylindriques respectives 7 alors rotatives d'une nacelle cylindrique 6 de la turbomachine.

Et, dans le prolongement axial de la partie 7 à l'hélice aval 4 se trouve une tuyère de sortie 8 à paroi cylindrique 9, liée en rotation à la partie 7 de l'hélice aval 4 de la nacelle et entourant concentriquement l'arrière de la turbine de puissance 5 (turbine basse pression 5B) qui se termine par un cône de sortie 10 solidaire en rotation de celle-ci et convergeant vers l'axe longitudinal A de la turbomachine 1. Le passage 11 à section transversale annulaire est alors ménagé entre la tuyère 8 et la turbine 5 à cône de sortie 10 et est traversé par les gaz de combustion issus de la chambre de combustion et circulant dans les différentes turbines haute et basse pression.

De la manière rappelée précédemment, ces gaz de combustion participent à la poussée globale fournie par la turbomachine 1, dont la plus grande partie est délivrée par les hélices contrarotatives 3, 4, entraînées par la turbine de puissance 5.

Conformément à l'invention, pour pouvoir répartir la poussée entre les hélices 3, 4 et la tuyère 8 selon les phases fonctionnelles de l'aéronef, la section transversale annulaire du passage 11 des gaz est rendue variable par la mobilité commandable de la tuyère 8. Bien entendu, la répartition de poussée s'effectue dans des plages contrôlées, prédéterminées relativement faibles, la poussée principale restant très largement fournie par les hélices.

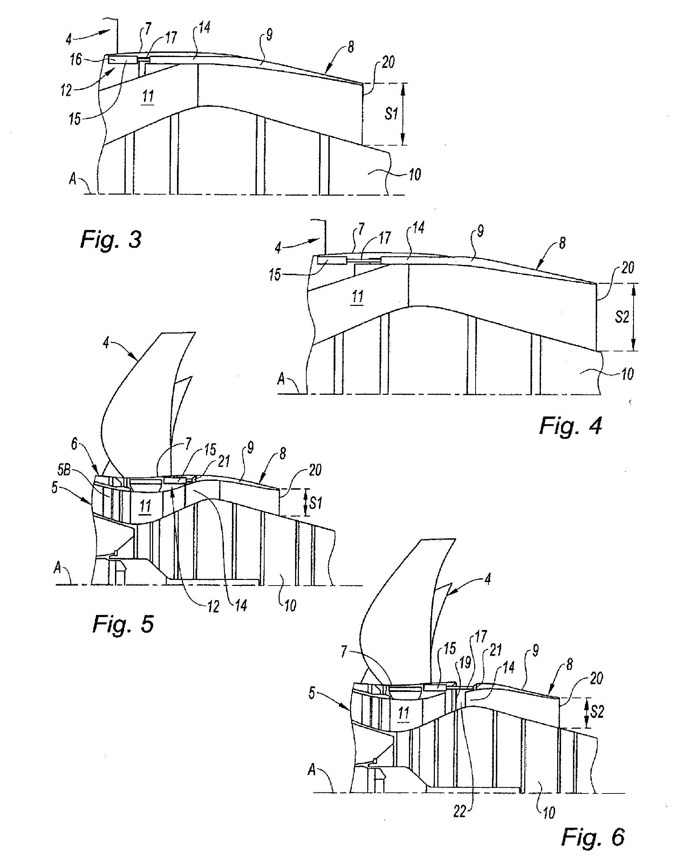

Comme le montrent davantage les figures 2 et 3, la tuyère rotative 8 est montée axialement mobile, selon l'axe A, entre deux positions extrêmes prédéterminées permettant d'obtenir deux sections de passage des gaz, qualifiées de minimale S1 et de maximale S2, grâce à des moyens de commande 12 prévus entre la nacelle 6 et la tuyère 8. Plus particulièrement, la paroi cylindrique 9 de la tuyère, qui prolonge coaxialement la nacelle, présente une partie cylindrique avant 14 qui s'engage à l'intérieur de la partie cylindrique 7, sous celle-ci de façon télescopique, jusqu'à venir en butée de manière que le profil extérieur de la partie cylindrique 7 de la nacelle 6 et le profil extérieur de la tuyère 8 soient en continuité l'un avec l'autre.

Pour autoriser le coulissement de la tuyère 8 par rapport à la partie cylindrique 7, liée à l'hélice aval 4, de la nacelle 6 et, comme on le verra, accroître la section transversale annulaire du passage des gaz, les moyens de commande 12 sont définis par des vérins 15 disposés parallèlement entre eux et à l'axe longitudinal A, et qui sont agencés de façon régulièrement répartie angulairement par rapport audit axe A de la turbomachine. Ces vérins 15 sont, par exemple, du type fluidique (hydraulique ou pneumatique), voire électrique, et les cylindres 16 de chacun d'eux sont articulés à la partie cylindrique 7 de la nacelle 6, tandis que les tiges 17 sont articulées à la partie cylindrique avant 14 de la paroi 9 de la tuyère 8.

Comme on le voit sur la figure 3, les vérins 15 occupent, dans ce mode de réalisation, la position rentrée, de sorte que la partie cylindrique avant 14 de la paroi 9 de la tuyère rotative 8 est engagée au maximun de façon télescopique dans la partie cylindrique rotative 7 de la nacelle 6. Dans cette position extrême de la tuyère 8, la section transversale annulaire 81 du passage 11 des gaz, prise à l'aplomb du bord de fuite arrière 20 de la tuyère avec le cône rotatif convergeant 10 à ce niveau, est alors considérée comme étant minimale.

Dans ce cas, lorsque la section 81 du passage 11 des gaz en sortie de tuyère est minimale, la détente possible issue des gaz pressurisés dans la turbine de puissance 5 entraînant les hélices 3, 4 est réduite et, donc, la poussée due aux hélices diminue, tandis que la détente dans la tuyère 8 augmente. En conséquence, une telle position de la tuyère 8 à section de passage minimale S1 des gaz est bien adaptée à la phase de décollage des avions équipés de ces turbomachines à hélices, puisque, par l'augmentation de la part de poussée engendrée par la tuyère, on diminue celle fournie par les hélices de sorte que celles-ci sont moins chargées, ce qui réduit l'impact acoustique (le jet gazeux de combustion étant considéré moins bruyant que les hélices) et diminue aussi la consommation durant cette phase de décollage.

Comme on le voit maintenant sur la figure 4, les vérins de commande 15 sont actionnés pour occuper leur position sortie, si bien que la tuyère rotative 8, par sa partie cylindrique 14, « coulisse » vers l'arrière, parallèlement à l'axe A de la turbomachine, en reculant par rapport à la partie cylindrique 7 de la nacelle 6. Dans cette seconde position extrême occupée par la tuyère, la section transversale annulaire S2 du passage des gaz, prise à l'aplomb du bord arrière 20 de la tuyère, est alors maximale, supérieure à S1, puisque le cône de sortie rotatif 10 de la turbine 5B converge vers l'axe A. Comme la tuyère 8 a reculé axialement par rapport au cône de sortie 10 qui est axialement fixe, la section S2 du passage 11 des gaz s'est agrandie.

Dans ce cas, lorsque la section de passage des gaz en sortie de tuyère est maximale, plus de puissance issue de la turbine 5 est fournie aux hélices 3, 4 et il reste moins d'énergie disponible dans la tuyère 8, puisqu'il se produit une diminution de la détente des gaz dans celle-ci.

En conséquence, une telle position de la tuyère à section de passage des gaz maximale S2, est particulièrement bien adaptée à des phases de vol de montée et de croisière pour lesquelles on demande un maximum de poussée par les hélices (dont le rendement propulsif est excellent), et un minimum de poussée par la tuyère primaire (dont le rendement est sensiblement plus faible), de façon à maximiser le rendement thermopropulsif de la turbomachine 1.

Au final, grâce à la tuyère 8 axialement mobile, à section variable de passage des gaz, on peut répartir de façon optimale la puissance entre les hélices 3, 4 et la tuyère 8 pour notamment réduire les nuisances sonores au décollage (en favorisant la tuyère) et la consommation en croisière (en favorisant les hélices).

A titre d'information, 7% de la poussée totale sont fournis par le jet gazeux avec une section de tuyère minimale (croisière, montée), tandis que 10% de la poussée sont fournis par le jet gazeux avec une section de tuyère maximale, le reste étant fournis par les hélices.

Cette répartition de puissance dans les open rotors ou turbopropulseurs à hélices dans des plages certes limitées, permet d'obtenir des gains en acoustique et en consommation de carburant, et également de limiter les contraintes sur les hélices notamment lors du décollage.

La variante de réalisation illustrée sur les figures 5 et 6 pour changer la section de passage 11 des gaz de combustion est proche de la précédente.

Des vérins de commande 15 également axiaux assurent le déplacement axial de la tuyère rotative 8 entre ses deux positions extrêmes selon les phases fonctionnelles de la turbomachine 1. Cependant, contrairement à la réalisation décrite, la partie avant 14 de la tuyère 8 ne s'engage pas aussi profondément dans la partie cylindrique correspondante rotative 7 de la nacelle 6, si bien que, lorsque les vérins 15 sont actionnés pour passer de leur position rentrée à leur position sortie, le bord avant 21 de la tuyère 8 s'éloigne, selon l'axe A, du bord arrière 19 terminant la partie cylindrique 7 de la nacelle 6 et laisse apparaître entre eux une ouverture cylindrique latérale 22.

Ainsi, comme le montre la figure 6, cette ouverture 22 crée une augmentation de la section d'éjection s'ajoutant à celle S2 en sortie de la tuyère, de sorte à obtenir, par ces variations de sections, une répartition de poussée appropriée entre les hélices et la tuyère.

Dans une variante de réalisation non illustrée, pour obtenir la variation de la section transversale annulaire du passage 11 des gaz de combustion par le déplacement axial de la tuyère 8, on peut envisager l'utilisation de matériau à mémoire de forme.

En effet, on sait que les matériaux tels que les alliages métalliques à mémoire de forme présentent la particularité de posséder, à l'état solide, deux structures cristallines stables (l'une en phase austénitique, l'autre en phase martensitique) respectivement dans deux domaines de température différents qui correspondent chacun à une phase spécifique de la structure cristalline de l'alliage et qui sont séparés par une zone intermédiaire dite de température de transition. De la sorte, en fonction de la température, la pièce réalisée en un tel alliage peut prendre deux configurations distinctes stables, de façon réversible. A titre d'exemple, ces alliages sont métalliques, du type nickel-titane ou cuivre-zinc-aluminium, selon les applications.

Par exemple, en disposant une telle pièce non représentée entre la nacelle et la tuyère rotative, on peut déplacer axialement cette dernière, en fonction de la température, et faire varier la section transversale annulaire de sortie de la tuyère. Une telle pièce joue ainsi le rôle de « muscle » en lieu et place des vérins.

En variante, on pourrait également associer la pièce à mémoire de forme directement à la paroi de la tuyère voire l'intégrer à la tuyère même pour obtenir la variation de section d'éjection.

Pour rappel, une telle tuyère à section variable décrite ci-dessus en liaison avec un open rotor peut être également montée sur des turbopropulseurs ou autres turbomachines à hélice.

## Revendications

1. Turbomachine à hélice(s) pour aéronef, comportant au moins une turbine (5) apte à entraîner en rotation l'hélice (3, 4), et une tuyère (8) prolongeant coaxialement ladite turbine en ménageant, avec un cône de sortie (10) terminant la turbine, un passage (11) à section transversale annulaire pour les gaz de combustion qui traversent la turbine, la tuyère (8) étant montée mobile entre deux positions extrêmes pour lesquelles la section transversale annulaire du passage (11) est respectivement minimale ou maximale, et des moyens de commande (12) étant associés à la tuyère pour changer la position de celle-ci et faire varier la section transversale du passage des gaz de combustion selon les phases fonctionnelles de l'aéronef, **caractérisée par le fait que**, pour obtenir la variation de section transversale du passage (11) des gaz de combustion, ladite tuyère (8) se déplace, sous l'action des moyens de commande (12), en translation parallèlement à l'axe longitudinal de la turbomachine vers lequel converge le cône de sortie (10) de la turbine.

2. Turbomachine selon la revendication 1, dans laquelle les moyens de commande (12) sont définis par des vérins ou analogues (15) reliant une partie de nacelle (6) périphérique entourant la turbine, à la tuyère (8).

3. Turbomachine selon la revendication 2, dans laquelle les vérins de commande (15) sont disposés de façon régulièrement répartie angulairement autour de la tuyère, parallèlement à l'axe longitudinal de la turbomachine.

4. Turbomachine selon l'une des revendications 1 à 3, dans laquelle, lors du déplacement en translation de la tuyère entre ses positions extrêmes, la paroi cylindrique (9) de celle-ci reste au contact de celle (7) de la nacelle.

5. Turbomachine selon l'une des revendications 1 à 3, dans laquelle, lors du déplacement en translation de la tuyère entre sa position extrême à section de passage minimale et sa position extrême à section de passage maximale, une ouverture annulaire (22) se crée entre la nacelle (6) et la tuyère (8).

6. Turbomachine selon la revendication 1, dans laquelle les moyens de commande (12) de la tuyère (8) sont réalisés en un matériau à mémoire de forme à deux états stables en fonction de la température, correspondant aux positions extrêmes de la tuyère pour lesquelles la section de passage est minimale ou maximale.

## Patentansprüche

1. Turbomaschine mit Propellerblatt(-blättern) für ein Fluggerät, mindestens umfassend eine Turbine (5), die geeignet ist, das Propellerblatt (3, 4) in Drehung anzutreiben, und eine Rohrleitung (8), die die Turbine koaxial verlängert, wobei sie mit einem die Turbine beendenden Ausgangskegel (10) einen Durchgang (11) mit ringförmigem Querschnitt für die Verbrennungsgase, die durch die Turbine strömen, ausnimmt, wobei die Rohrleitung (8) zwischen zwei Endpositionen, in denen der ringförmige Querschnitt des Durchgangs (11) minimal bzw. maximal ist, beweglich montiert ist, und wobei Steuermittel (12) mit der Rohrleitung verbunden sind, um die Position derselben zu verändern und den Querschnitt des Durchgangs für die Verbrennungsgase je nach den Betriebsphasen des Fluggeräts zu variieren, **dadurch gekennzeichnet, dass** sich die Rohrleitung (8), um die Variation des Querschnitts des Durchgangs (11) für die Verbrennungsgase zu erzielen, unter der Wirkung der Steuermittel (12) in Translation parallel zur Längsachse der Turbomaschine, zu der der Ausgangskegel (10) der Turbine konvergierend ist, verschiebt.

2. Turbomaschine nach Anspruch 1, bei der die Steuermittel (12) durch Zylinder oder dergleichen (15) definiert sind, die einen die Turbine umgebenden Teil einer Umfangsgondel (6) mit der Rohrleitung (8) verbinden.

3. Turbomaschine nach Anspruch 2, bei der die Steuerzylinder (15) regelmäßig ringförmig um die Rohrleitung verteilt parallel zur Längsachse der Turbomaschine angeordnet sind.

4. Turbomaschine nach einem der Ansprüche 1 bis 3, bei der bei der Translationsverschiebung der Rohleitung zwischen ihren Endpositionen die zylindrische Wand (9) derselben mit jener (7) der Gondel in Kontakt bleibt.

5. Turbomaschine nach einem der Ansprüche 1 bis 3, bei der bei der Translationsverschiebung der Rohrleitung zwischen ihrer Endposition mit minimalem Durchgangsquerschnitt und ihrer Endposition mit maximalem Durchgangsquerschnitt eine ringförmige Öffnung (22) zwischen der Gondel (6) und der Rohrleitung (8) entsteht.

6. Turbomaschine nach Anspruch 1, bei der die Steuermittel (12) der Rohrleitung (8) aus einem Material mit Formgedächtnis mit zwei stabilen Zuständen in Abhängigkeit von der Temperatur, entsprechend den Endpositionen der Rohrleitung, in denen der Durchgangsquerschnitt minimal oder maximal ist, hergestellt sind.

## Claims

1. A turbomachine having one or more propellers for aircraft, comprising at least one turbine (5) for driving the propeller (3, 4) in rotation, and a nozzle (8) which extends coaxially beyond said turbine, creating, with an exhaust cone (10) which terminates the turbine, a passage (11) of annular cross section for the combustion gases flowing through the turbine, the nozzle (8) being mounted so as to be able to move between two end positions at which the annular cross section of the passage (11) is respectively at a minimum or a maximum, and control means (12) being attached to the nozzle in order to change the position thereof and to vary the cross section of the passage for the combustion gases depending on the functional phases of the aircraft, **characterized in that**, in order to vary the cross section of the passage (11) for the combustion gases, said nozzle (8) moves, under the action of the control means (12), in translation parallel to the longitudinal axis of the turbomachine toward which the exhaust cone (10) of the turbine converges.

2. The turbomachine as claimed in claim 1, wherein the control means (12) are actuators or similar (15) connecting a portion of a peripheral nacelle (6), which surrounds the turbine, to the nozzle (8).

3. The turbomachine as claimed in claim 2, wherein the control actuators (15) are arranged distributed at regular angular intervals around the nozzle, parallel to the longitudinal axis of the turbomachine.

4. The turbomachine as claimed in one of claims 1 to 3, wherein, when the nozzle moves in translation between its end positions, the cylindrical wall (9) of the nozzle remains in contact with the cylindrical wall (7) of the nacelle.

5. The turbomachine as claimed in one of claims 1 to 3, wherein, when the nozzle moves in translation from its end position of minimum passage cross section to its end position of maximum passage cross section, an annular opening (22) is created between the nacelle (6) and the nozzle (8).

6. The turbomachine as claimed in claim 1, wherein the control means (12) of the nozzle (8) are made of a shape-memory material having two stable states depending on the temperature, corresponding to the end positions of the nozzle at which the passage cross section is at a minimum or a maximum.
